# EUROPEAN PATENT APPLICATION

(11) **EP 1 290 950 A1**
(43) Date of publication of application: **12.03.2003**
(21) Application number: 01203419.5
(22) Date of filing: 10.09.2001
(51) Int. Cl.: A23G 3/20, A23G 9/24, A23G 9/28

(54) **Dessert product comprising particles in the form of flakes**

(71) Applicant: CAMPINA MELKUNIE B.V., NL-5301 LB Zaltbommel (NL)
(72) Inventor: Ramuschkat, Ilse, 74670 Forchtenberg (DE); Knoche, Berthold, 74078 Heilbronn (DE)
(74) Representative: Barendregt, Frank, Drs.

(57) **Abstract**

The invention relates to a dessert product, which is stable at ambient temperature up to 20 °C, comprising a dessert composition and particles of a fat composition including fat, one or more aroma components and optional further additives
characterized in that the fat composition is solid at room temperature and melts at or below mouth temperature of a consumer whereas the particles have a flake form whereby the maximum dimension in the plane of a particle is substantially larger than the thickness of a particle.

The invention also relates to a method for forming the product as described.

## Description

The present application concerns a dessert product comprising a dessert composition and particles of a fat composition including fat, one or more aroma components and optional further additives. Such a product is known from EP-A-0 615 692.

Said document describes a product and method for forming thereof whereby the product is a mousse type of product comprising between 2 and 10 wt.% of chocolate whereby the chocolate particles have a dimension between 1 and 4 mm.

Although such dessert products enjoy substantial popularity in the market, the large and irregular formed particles provide a taste sensation of chocolate mainly as a result of a chewing action which is necessary to provide the fine division which is necessary for the aroma substances to be set free in the mouth.

The present invention aims to provide a dessert product of the type described which is not restricted to a mousse type of dessert composition and chocolate but which can comprise any type of sweet and acidic dessert and in which the flavor components are more easily set free in the mouth without any intensive chewing. Examples of such dessert products are vanilla pudding, custard and yoghurt.

To that end the dessert product of the type described is according to the present invention characterized in that the fat composition is solid at room temperature and melts at or below mouth temperature of a consumer whereas the particles have a flake form whereby the maximum dimension in the plane of a particle is substantially larger than the thickness of a particle.

By providing a fat composition which is solid at room temperature and melts at or below mouth temperature of a consumer and at the same time by the provision of particles having a flake form and a thickness which is substantially smaller than the maximum dimension of the flake formed particle, the flavour sensation is provided by a rapid melting of the fat composition when present in the mouth of a consumer.

In order to melt at mouth temperature of the consumer the fat composition expediently melts in a temperature range of 25 tot 35 °C, preferably in a range between 28 and 32 °C.

As to the dimensions of the particles the maximum dimension of a particle in the plain thereof ranges from 2 to 15 mm whereas the thickness ranges from 0.1 to 2 mm; preferably the maximum dimension ranges from 2 to 8 mm and the thickness from 0.15 to 0.25 mm.

By providing a fat composition which melts in the given range and having dimensions of the type described the aromatic and other flavour providing or enhancing components are released very rapidly when the dessert product is in the mouth of the consumer and even without intensive chewing this sensation is experienced.

The fat composition of course can be any fat composition, which is conventionally used and accepted in food products and is preferably a fat composition of vegetable origin. The fat composition can comprise a single fat or a mixture of suitable fats e.g. hydrogenated coconut oil and/or hydrogenated palm kernel oil.

Preferably the fat composition comprises at least 60 wt.% of fat and even more preferable at least 70 wt.% fat.

A suitable composition would be 60-75 wt.% vegetable fat, the balance being sugar and cocoa particles.

Vegetable fat in an amount of 62 wt.%, cocoa 12 wt.% and sugar 26 wt.% provides excellent results.

Suitable other fats are compositions of a vegetable fat and/or butter fat, in which the ratio is dependent on the melting point.

The dessert composition can be chosen from sweet and acidic dessert compositions and can be stored at a temperature up to 20 °C.

The invention also relates to a method of forming a dessert product comprising a dessert composition and particles of a fat composition including fat, one or more aroma components and optional further additives wherein the fat composition is brought into a molten condition and combined with the dessert material, which has been given a substantially lower temperature than the molten fat composition, causing the fat composition to solidify at least partially into a strand form which strand subsequently is mechanically divided into small particles which are dispersed throughout the dessert material.

This method is also known from EP-A-0 615 692 as cited herein before; the at least partially solidified fat composition is divided into small particles by means of a rotating knife which breaks up the strand into irregular pieces having dimensions between 1 and 4 mm.

As explained hereinbefore the present invention aims to provide a dessert product having particles which release very quickly the flavour included in the fat composition by a melting action in the mouth without the need for intensive chewing.

According to the invention the division of the at least partially solidified strand of fat composition is effected with use of at least a rotor and stator type of mixing device causing the formation of particles in flake form whereby the maximum dimension in the plane of a particle is substantially larger than the thickness of a particle.

The rotor and stator type of mixing device is well known and surprisingly allows in the present method the in situ formation of flake formed particles whereby a product having the desired characteristics is obtained.

The maximum dimension in the plane of a particle obtained in the present method ranges from 2 to 15 mm and a thickness between 0.1 to 0.4 mm; preferably the maximum dimensions are between 2 and 8 mm and the thickness between 0.15 and 0.25 mm.

The mixing device used in pilot plants is preferably a Mondomixer type Minimondo, and in production plants the type Mondo VE5O, both of Mondomix (Nederhorst den Berg, The Netherlands). Hereby a rotor having a plurality of blades is rotated whereby a blade of the rotor moves between two adjacent blades of the stator. The small distance between the rotor and the stator blades allows the thickness of the flakes formed to be adjusted to a desired value.

The present method will be illustrated with aid of a drawing wherein:
Fig. 1 schematically describes the situation when injecting a stream of molten fat composition into a stream of dessert composition;
Fig. 2 a flow diagram for preparing a dessert product according to the invention.

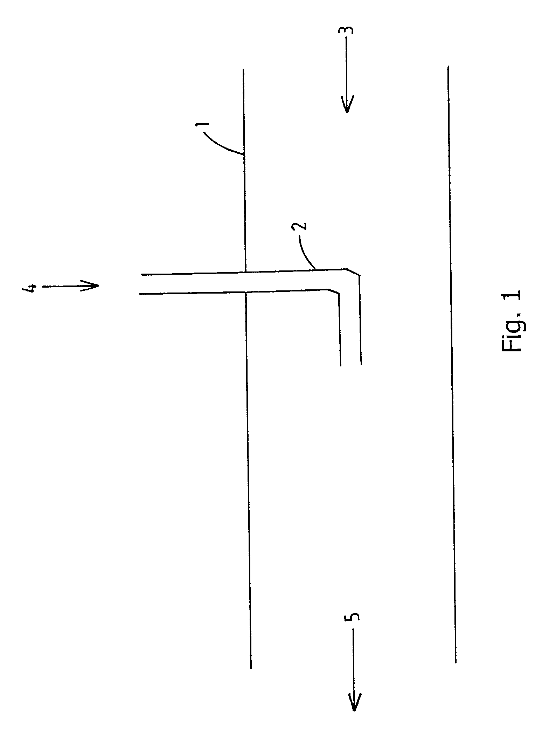

In fig. 1 a VA-tube is given with 1, an injection tube is given by 2, the stream of dessert composition is indicated by 3 and the stream of fat composition is indicated by 4.

The tube 2 and in particular the mouth thereof has an inner diameter of 5 mm; typically the mouthpiece is located in the centre of the VA-tube 1.

The fat composition typically is in a molten condition at a temperature of 30 to 40 °C; the stream 3 is typically at a temperature of 5 °C.

The stream 4, when entering in the stream 3 is cooled down quite rapidly and a type of strand of at least partially solidified fat composition is formed in the centre of the stream 3. Downstream of the fat composition injection the combined stream 5 of dessert composition and partially solidified strand of fat composition is fed to a mixing device of the rotor and stator type wherein the at least partially solidified fat composition is divided into particles of flake form having the dimensions and thickness as indicated herein before.

Preferably the strand of at least partially solidified fat composition is broken up in coarse pieces before entering the rotor-stator mixing device.

The breaking up can be carried out with use of a rotating knife as described in EP-A-0 615 692 as discussed herein; any device which is capable of breaking up a moving strand of at least partially solidified fat composition is however suitable.

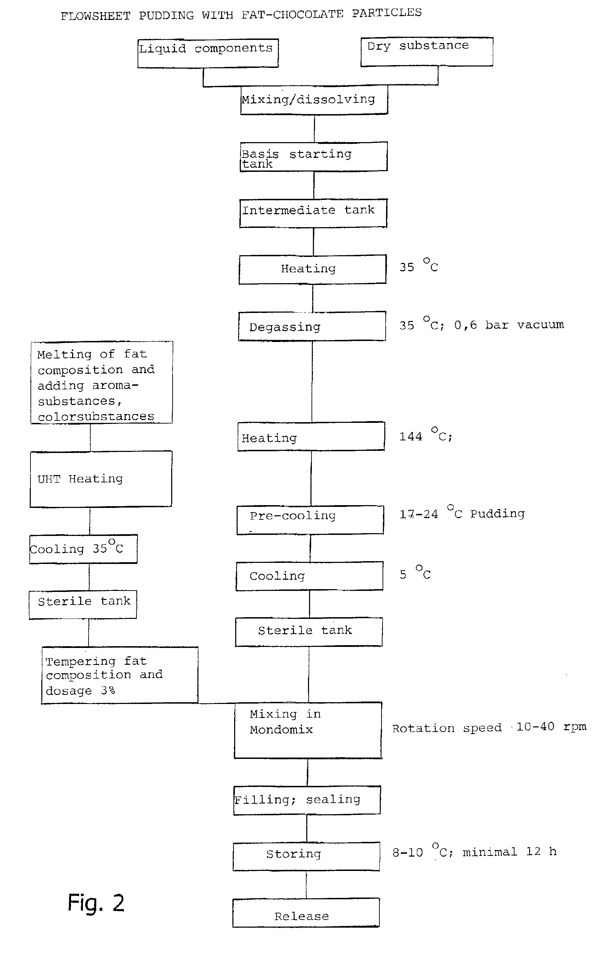

In fig. 2 a flow diagram of the production of a pudding having chocolate flakes is given.

The liquid component and dry matter are mixed and brought into solution, the mixture is heated, degasified, heated again at 144 °C for destroying all vegetative germs and spores, subsequently in two steps the dessert composition is cooled to 17-24 °C in the first step and subsequently to 5 °C in the second step to end up in a sterile tank.

For preparing the fat composition the desired fat or fat mixture is molten and aroma substances, colours and other additives are included in the mixture. Subsequently the fat composition is heated at 144 °C for destroying all vegetative germs or spores whereafter the fat composition is cooled to 35 °C.

The cooled mixture which is still in the molten state is then fed into the sterile tank and then tempered and dosed in, for instance, a weight percentage of 3% into the stream 3 as shown in figure 1.

Mixing takes place in the Mondomixer as indicated before at a rotating speed of 10 to 40 rpm and subsequently packed and stored at 8 to 10 °C during at least 12 hours. After that the product can be supplied to the consumer market where storing can be done up to a temperature of 20 °C.

Typically in above production scheme 6000 kg/h dessert product is mixed with 180 kg/h fat composition.

A typical composition for the chocolate flake formation is:

| | |
|---|---|
| 62.0 | wt.% fat |
| 26 | wt.% sugar |
| 11.5 | wt.% cocoa powder |
| 0.5 | wt.% emulsifier lecithin E322 |

The fat was in this case cocoa butter; the mixture had a melting point of 28 °C.

Another composition comprised

| | |
|---|---|
| 72 | wt% vegetable fat |
| 26 | wt.% milk sugar and sugar |
| 1 | wt.% fruit flavour |
| 1 | wt.% emulsifier licithin E322 |

Again, the mixture had a melting point of 28 °C.

Optional is the use of a salt of an organic acid e.g. citric acid to improve the flavor.

For sweet dessert and acid dessert compositions having a pH-value > 4.5 a UHT heating at 141 °C may be carried out to kill all germs and spores.

Acid dessert products having a pH < 4.5 are pasteurised during the production at 121 °C, then fermented until a pH lower than 4.5 and subsequently thermally treated at 75 °C.

Upon introduction of the fat composition in the dessert composition whereby the fat composition is at a temperature between 30 and 40 °C and the dessert composition at a temperature of 5 °C, the strand starts to solidify from the outside to the inside. The transport distance of the strand in the dessert composition takes place over a distance between 200 and 1500 mm before introduced into the rotor-stator system type-mixing device of Mondomix. For the most part the partially solidified fat composition strand is formed and rent into flakes with use of the mixing head of the rotor-stator mixing system and subsequently dispersed through the dessert. The forming and rending starts in a cylindrical tube, which is positioned perpendicular to the direction of flow of the dessert composition, and continues in the mixing head of the rotor-stator mixing system.

The fat composition is introduced in the main stream of the dessert composition by using a double walled tube; this allows to keep the temperature of the fat composition in respect of the temperature in the sterile tank constant or it can be changed at wish.

The particle dimension, i.e. the maximum dimension of the flakes and the thickness can be controlled by the temperature difference between the dessert composition and the fat composition and the rotational speed of the rotor.

In case of machine stop it may be possible that the fat composition solidifies in the nozzle of the injection tube; upon machine problems the nozzle and, if necessary, the tube can be cleaned by a short injection of nitrogen.

The products obtained, i.e. the sweet desserts including acid fermented milk products have microbiological stability when stored at ambient temperature up to 20 °C.

As said the term dessert product has the meaning of pudding, custard, yoghurt, long-life yoghurt and so on.

A typical recipe for pudding is

| | |
|---|---|
| Modified starch | 4 wt.% |
| Sugar | 8 wt.% |
| Milk + flavour | balance |

Long life yoghurt has as a typical recipe

| | |
|---|---|
| Sugar | 12 wt.% |
| Gelatin | 0.3 wt.% |
| Modified starch | 2.2 wt.% |
| Milk + yoghurt culture | balance |

The values vary with the fat content.

The flavour included in the fat composition can be any natural or artificial flavour like chocolate, fruit, caramel, coffee, vanilla and so on.

## Claims

1. Dessert product comprising a dessert composition and particles of a fat composition including fat, one or more aroma components and optional further additives
**characterized in that**
the fat composition is solid at room temperature and melts at or below mouth temperature of a consumer whereas the particles have a flake form whereby the maximum dimension in the plane of a particle is substantially larger than the thickness of a particle.

2. Dessert product according to claim 1
**characterized in that**
the fat composition melts in the temperature range of 25 to 35 °C.

3. Dessert product according to claim 2
**characterized in that**
the fat composition melts in the temperature range of 28 to 32 °C.

4. Dessert product according to any of the claims 1-3
**characterized in that**
the maximum dimension of a particle in the plane thereof ranges from 2 to 15 mm whereas the thickness ranges from 0.1 to 0.4 mm.

5. Dessert product according to claim 4
**characterized in that**
the maximum dimension of a particle in the plane thereof ranges from 2 to 8 mm whereas the thickness ranges from 0.15 to 0.25 mm.

6. Dessert product according to any of the claims 1 to 5
**characterized in that**
the dessert composition is chosen from sweet and acidic dessert compositions and can be stored at ambient temperature up to 20 °C.

7. Method of forming a dessert product comprising a dessert composition and particles of a fat composition including fat, one or more aroma components and optional further additives wherein the fat composition is brought into a molten condition and combined with the dessert material, which has been given a substantially lower temperature than the molten fat composition, causing the fat composition to solidify at least partially into a strand form which strand subsequently is mechanically divided into small pieces which are dispersed throughout the dessert material
**characterized in that**
the division of the at least partially solidified strand of fat composition is effected with use of at least a rotor and stator type of mixing device causing the formation of particles in flake form whereby the maximum dimension in the plane of a particle is substantially larger than the thickness of a particle.

8. Method according to claim 7
**characterized in that**
the maximum dimension of a particle in the plane thereof ranges from 2 to 15 mm whereas the thickness ranges from 0.1 to 0.4 mm.

9. Method according to claim 8
**characterized in that**
the maximum dimension of a particle in the plane thereof ranges from 2 to 8 mm whereas the thickness ranges from 0.15 to 0.25 mm.
